# NOUVEAU FASCICULE DE BREVET EUROPEEN

(11) **EP 2 149 726 B2**
(45) Date de publication et mention de la décision concernant l'opposition: **13.08.2014**
(45) Mention de la délivrance du brevet: 10.11.2010
(21) Numéro de dépôt: 09165083.8
(22) Date de dépôt: 09.07.2009
(51) Int. Cl.: F16H 45/02

(54) **Embrayage de verrouillage pour un appareil d'accouplement hydrocinétique comportant des moyens de liaison perfectionnés**
Verschlusskupplung eines Geräts zur hydrokinetischen Ankupplung, das über perfektionierte Verbindungsmittel verfügt
Lock-up clutch for a hydrokinetic coupling device comprising improved linking means

(30) Priorité: 31.07.2008 FR 0855293
(43) Date de publication de la demande: 03.02.2010
(73) Titulaire: Valeo Embrayages, 80009 Amiens (FR)
(72) Inventeur: Verhoog, Roel, 60190 GOURNAY SUR ARONDE (FR); Arhab, Rabah, 95350 ST BRICE SOUS FORÊT (FR); Termenon, Norberto, 75019 PARIS (FR)

(56) Documents cités:
- EP-A- 1 008 784
- WO-A-2007/140756
- DE-A1- 19 808 299
- DE-A1- 19 838 445
- DE-A1-102006 048 499
- JP-A- 57 054 767
- JP-A- 58 030 531
- JP-A- 61 262 262
- JP-A- H03 144 153
- JP-A- 2006 090 375

## Description

La présente invention concerne un embrayage de verrouillage pour un appareil d'accouplement hydrocinétique comportant des moyens de liaison perfectionnés.

L'invention concerne plus particulièrement un embrayage de verrouillage pour un appareil d'accouplement hydrocinétique, notamment de véhicule automobile, comportant, autour d'un axe principal, au moins un premier élément comportant une première surface de frottement destinée à coopérer sélectivement avec une deuxième surface de frottement d'un second élément dans lequel des moyens d'articulation, d'une part, et des moyens d'étanchéité, d'autre part, sont respectivement interposés axialement entre une face proximale d'appui du premier élément et une face distale d'appui d'un élément adjacent et dans lequel le premier élément et l'élément adjacent qui s'étendent radialement, orthogonalement par rapport à l'axe principal, sont liés en rotation par l'intermédiaire de moyens de liaison aptes à assurer une transmission de couple entre lesdits éléments.

Le document DE 102006048499 A1 décrit un appareil d'accouplement hydrocinétique comportant un exemple de réalisation d'un tel embrayage de verrouillage muni de moyens d'articulation et d'étanchéité associés.

Dans ce document, l'embrayage de verrouillage comporte un premier élément formé par un disque, dit de support, comportant une première surface de frottement qui, appartenant à une garniture de frottement solidaire du disque, est destinée à coopérer, en position de fonctionnement (état embrayé), avec une deuxième surface de frottement d'un second élément.

La deuxième surface de frottement s'étend, axialement en vis-à-vis de la première, globalement parallèlement à la première surface de frottement d'orientation radiale.

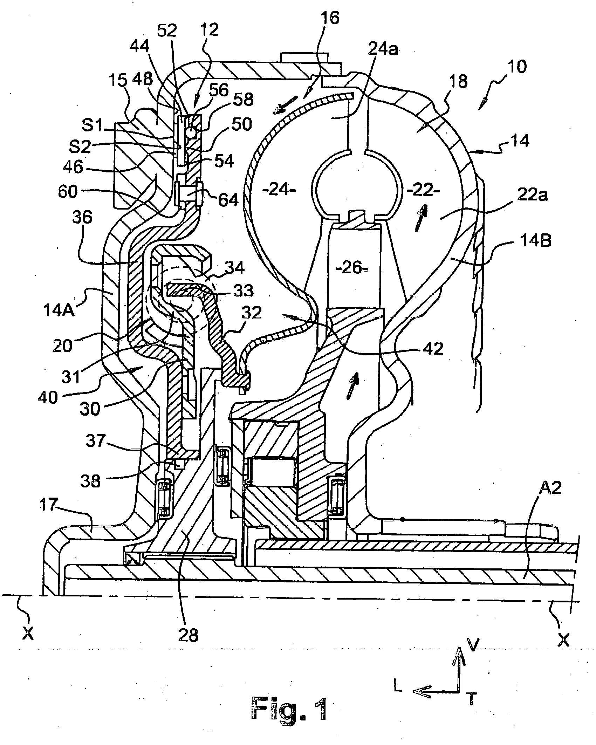

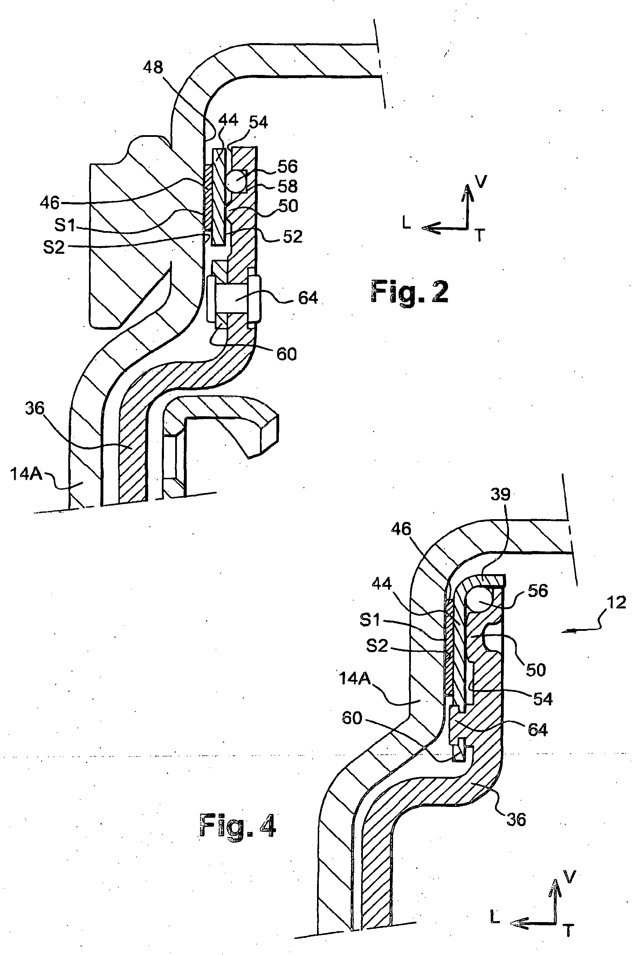

Dans le cas d'un embrayage de type "monoface" (Figures 1 et 2), le second élément est constitué par l'une des coquilles du carter dont une portion annulaire de la paroi forme la deuxième surface de frottement.

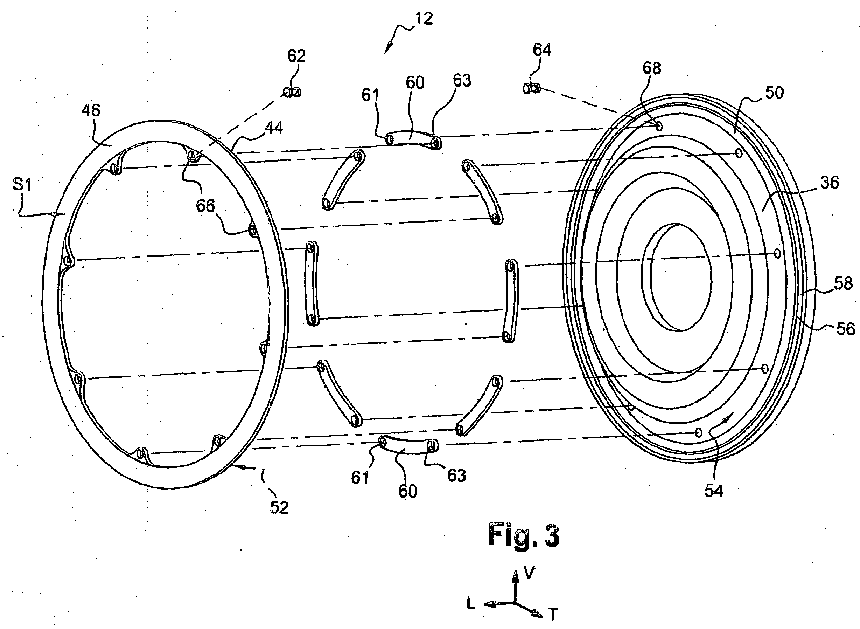

Dans le cas d'un embrayage de verrouillage de type "bifaces" (Figure 3), le second élément est constitué par un disque de friction qui, interposé axialement entre le premier élément et la coquille du carter, comporte deux garnitures de frottement.

Ainsi, la face radiale de l'une des garnitures de frottement forme la deuxième surface de frottement destinée à coopérer avec la première surface de frottement du premier élément tandis que la face radiale de l'autre des garnitures de frottement forme une troisième surface de frottement destinée à coopérer avec une quatrième surface de frottement formée par une portion annulaire de la paroi de la coquille du carter.

Dans chacun de ces types d'embrayages de verrouillage, le disque de support formant le premier élément est lié en rotation à un élément adjacent formé par un piston.

Le disque de support comporte une face proximale d'appui qui, axialement opposée à la face portant la garniture de frottement, s'étend radialement, globalement parallèlement, à une face distale d'appui en vis-à-vis que comporte le piston.

Le disque de support comporte des moyens d'articulation qui s'étendent axialement en saillie à partir de la face proximale d'appui et coopèrent avec la face distale d'appui du piston de manière à former une articulation propre à permettre un mouvement relatif entre le disque de support et le piston.

Des moyens d'étanchéité réalisés sous la forme d'un joint à lèvres sont encore agencés entre la face proximale du disque de support et la face distale du piston de manière à assurer l'étanchéité requise pour déplacer axialement le piston de sa position de repos (état débrayé) vers sa position de fonctionnement (état embrayé).

Dans ce document, le disque de support formant le premier élément est lié en rotation par des moyens de liaison par engrènement au piston formant l'élément adjacent. Plus précisément, le disque de support comporte des pattes qui s'étendent axialement à travers le piston qui comporte à cet effet des logements complémentaires dans lesquels pénètrent les pattes d'entraînement.

Cependant de tels moyens de liaison ne donnent pas entière satisfaction pour différentes raisons explicitées ci-après.

Avec de tels moyens de liaison en rotation par engrènement, la coopération de formes entre les pattes et les logements s'effectue nécessairement avec un certain jeu radial et/ou axial afin de conserver la possibilité de mouvement relatif du disque de support par rapport au piston par l'intermédiaire des moyens d'articulation.

Par conséquent, les déplacements du disque de support par rapport au piston provoquent d'importants frottements au niveau des moyens de liaison formés par les pattes et des logements, ce qui n'est pas sans poser des problèmes d'usure.

De plus, de tels moyens de liaison par engrènement sont particulièrement coûteux à fabriquer, en raison notamment des opérations nécessaires à l'obtention des pattes et des logements, voir des traitements appliqués ultérieurement, par exemple pour en renforcer la dureté.

Le but de la présente invention est notamment de résoudre les inconvénients précités et de proposer un embrayage de verrouillage comportant des moyens de liaisons perfectionnés qui soient simples, fiables et peu coûteux.

Dans ce but, l'invention propose un embrayage de verrouillage selon la revendication 1.

Les languettes élastiques selon l'invention constituent des moyens de liaison en rotation particulièrement fiables dès lors que, par comparaison notamment à la liaison par engrènement de l'état de la technique, de telles languettes élastiques ne sont pas exposées à des problèmes de frottements et d'usure de nature à affecter leur bon fonctionnement ainsi que celui des moyens d'articulation.

Avantageusement, les languettes élastiques présentent une grande rigidité circonférentiellement, c'est-à-dire dans le plan radial moyen dans lequel les languettes sont entraînées en rotation avec le premier élément et l'élément adjacent autour de l'axe principal X-X, de manière à transmettre le couple du premier élément à l'élément adjacent.

Avantageusement, les languettes élastiques présentent une élasticité axiale propre à améliorer le fonctionnement des moyens d'articulation, les languettes participant à l'introduction d'une élasticité ou souplesse qui facilite les mouvements de "roulement" du premier élément par rapport au moyen d'articulation porté par le piston.

Dans l'embrayage de verrouillage selon l'invention, le premier élément, tel que le disque, portant la première surface de frottement n'est pas relié rigidement à l'élément adjacent, tel que le piston, de sorte que ces éléments sont susceptibles de se déformer indépendamment l'un de l'autre par l'intermédiaire des moyens d'articulation et cela de manière à obtenir une coopération des surfaces de frottement globalement coplanaires, quelle que soit la pression d'huile appliquée sur le piston pour serrer axialement les surfaces de frottement.

Selon d'autres caractéristiques de l'invention :
- les moyens d'articulation sont formés par un bossage annulaire qui s'étend axialement en saillie par rapport à l'une des faces proximale d'appui du premier élément ou distale d'appui de l'élément adjacent, et dont une partie sommitale coopère avec l'autre des faces proximale d'appui du premier élément ou distale d'appui de l'élément adjacent agencée axialement en vis-à-vis ;
- les moyens d'étanchéité sont formés par les moyens d'articulation intervenant entre le premier élément et l'élément adjacent ;
- les moyens d'étanchéité sont constitués par des moyens déformables élastiquement au moins selon la direction axiale de manière que lesdits moyens d'étanchéité forment des moyens de progressivité ;
- chacune des languettes élastiques s'étend circonférentiellement entre l'une et l'autre de ses extrémités suivant un profil rectiligne ou curviligne ;
- les languettes élastiques exercent axialement un effort de rappel élastique, notamment apte à assurer un contact permanent entre les moyens d'articulation portés par l'un desdits premier élément ou élément adjacent avec la face d'appui de l'autre desdits premier élément ou élément adjacent ;
- les languettes élastiques sont distinctes des éléments qu'elle lient en rotation et l'une des extrémités de chaque languette forme la première partie de jonction solidaire du premier élément par l'intermédiaire de premiers moyens de fixation et l'autre des extrémités forme la deuxième partie de jonction solidaire de l'élément adjacent par l'intermédiaire de deuxièmes moyens de fixation ;
- les moyens de fixation des languettes élastiques, tels que les premiers et/ou les deuxièmes moyens de fixation, sont constitués par des rivets ;
- les languettes élastiques sont cambrées ;
- le premier élément est formé par un disque de support et/ou une garniture de frottement et l'élément adjacent lié en rotation au premier élément est formé par un piston ou par l'une avant des coquilles du carter de l'appareil.

D'autres caractéristiques et avantages de l'invention apparaîtront à la lecture de la description détaillée qui suit pour la compréhension de laquelle on se reportera aux dessins annexés parmi lesquels :
- la figure 1 est une demi vue en coupe axiale qui représente un appareil d'accouplement hydrocinétique équipé d'un embrayage de verrouillage de type monoface et qui illustre un premier exemple de réalisation de moyens de liaison en rotation selon l'invention formés par des languettes élastiques rapportées ;
- la figure 2 est une vue en coupe axiale qui représente de manière détaillée une partie de l'embrayage de la figure 1 ;
- la figure 3 est une vue en perspective qui représente partiellement, en éclaté, le premier exemple de réalisation de l'invention selon les figures 1 et 2 précédentes et qui illustre des languettes élastiques indépendantes qui sont chacune fixées par rivetage à leurs extrémités respectivement avec le disque de support et le piston ;
- la figure 4 est une vue en coupe axiale qui, analogue à la figure 2, représente de manière détaillée un deuxième exemple de réalisation d'un embrayage de verrouillage selon l'invention dans une variante non revendiquée ;

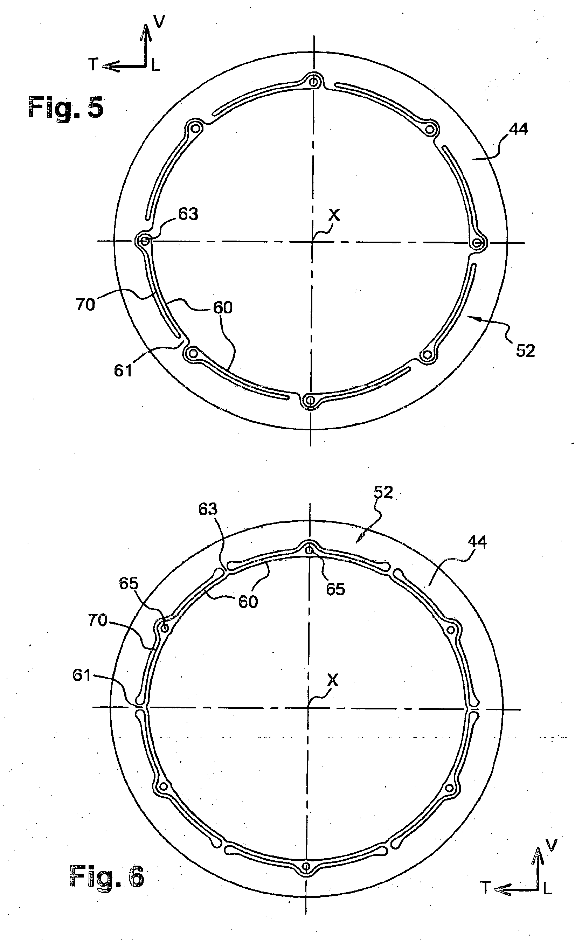

- la figure 5 est une vue de face qui représente en détail un disque de support et qui illustre une variante de réalisation n'appartenant pas à l'invention selon laquelle les languettes élastiques sont réalisées en une seule pièce avec le disque de support, chacune des languettes étant liée par une de ses extrémités circonférentielles au disque et par l'autre extrémité libre fixée au piston par rivetage;
- la figure 6 est une vue de face qui représente en détail un disque de support et qui illustre une autre variante de réalisation n'appartenant pas à l'invention dans laquelle les languettes élastiques sont réalisées en une seule pièce avec le disque de support auquel chaque languette est liée par chacune de ses extrémités circonférentielles, une partie centrale de la languette étant fixée par rivetage au piston.

Dans la description et les revendications, on utilisera à titre non limitatif et afin d'en faciliter la compréhension, les termes « avant » ou « arrière », « supérieur » ou « inférieur », « externe » ou « interne », etc. ainsi que les orientations « axial » ou « radial » pour désigner des éléments selon les définitions données dans la description et par rapport aux directions longitudinale, verticale et transversale du trièdre (L, V, T) représenté sur les figures.

Dans la description, les éléments identiques, similaires ou analogues seront désignés par les mêmes chiffres de référence.

Par convention, les orientations « avant » et « arrière » correspondent respectivement à la gauche et à la droite de la figure 1 suivant l'axe principal X-X de rotation qui, s'étendant longitudinalement, détermine l'orientation « axiale » par opposition à l'orientation « radiale » qui lui est orthogonale et qui s'étend verticalement selon le trièdre (L, V, T).

Les termes « extérieur ou externe » et « intérieur ou interne » sont utilisés pour définir la position relative d'un élément par rapport à un autre selon l'orientation radiale correspondant à la direction verticale et, par référence à l'axe principal X-X, un élément proche de l'axe X-X est ainsi qualifié d'interne par opposition à un élément externe qui est situé radialement en périphérie.

On a représenté à la figure 1, un appareil d'accouplement hydrocinétique 10, notamment pour un véhicule automobile, comportant un embrayage de verrouillage 12, encore appelé "lock-up" en terminologie anglaise.

L'embrayage de verrouillage 12 représenté à la figure 1 est un embrayage dit "monoface", généralement désigné ainsi en raison du fait qu'il ne comporte qu'une seule garniture de frottement et cela par comparaison aux autres types d'embrayages de verrouillage connus qui comportent deux et plus de deux garnitures de frottement, d'où il s'en suit les autres désignations associées "bifaces" et "multifaces" respectivement.

L'embrayage de verrouillage 12 de type "monoface" pour appareil d'accouplement hydrocinétique 10 ne constitue par conséquent qu'un exemple possible et non limitatif d'application de l'invention.

L'appareil d'accouplement hydrocinétique 10 comporte un axe principal X-X de rotation autour duquel sont disposés les différentes pièces.

L'appareil d'accouplement hydrocinétique 10 comporte un carter étanche 14 formé respectivement d'une première coquille arrière 14B et d'une deuxième coquille avant 14A, qui sont de préférence assemblées par soudage.

Les coquilles arrière 14B et avant 14A du carter 14 délimitent à l'intérieur un volume 16 de l'appareil 10 dans lequel sont principalement agencés un convertisseur de couple 18, l'embrayage de verrouillage 12 et un dispositif d'amortissement 20.

Le convertisseur de couple 18 comporte une roue d'impulseur arrière 22, une roue de turbine avant 24 et, de préférence, une roue de réaction centrale 26.

La roue d'impulseur 22 comporte des aubes 22a qui sont portées par la première coquille arrière 14B de carter solidaire en rotation de la deuxième coquille avant 14A du carter 14.

La deuxième coquille avant 14A est apte à être liée en rotation à un arbre menant (non représenté) notamment par l'intermédiaire de moyens de couplage comportant, d'une part, des moyens de liaison 15 formant écrou et, d'autre part, un organe de centrage 17.

Les moyens de liaison 15 sont par exemple rapportés par soudage sur la face radiale avant de la deuxième coquille avant 14A et sont destinés à recevoir des vis pour assurer la fixation de l'appareil 10 avec un flasque ou volant flexible (non représenté) du moteur.

La deuxième coquille avant 14A étant solidaire en rotation de la première coquille arrière 14B, on assure ainsi la liaison entre l'arbre menant et la roue d'impulseur 22 du convertisseur.

La roue de turbine 24 comporte des aubes 24a qui font face axialement aux aubes 22a de la roue d'impulseur 22 afin d'assurer l'entraînement en rotation de la roue de turbine 24 par la roue d'impulseur 22 grâce à la circulation entre les aubes 22a, 24a d'un fluide, en général de l'huile, contenu dans le volume 16 du carter 14.

La roue de turbine 24 est liée en rotation à un arbre mené A2 qui est coaxial à l'axe principal X-X de l'appareil 10, ladite liaison en rotation étant une liaison sans jeu réalisée par l'intermédiaire d'au moins une pièce intermédiaire avantageusement apte à être liée en rotation à l'arbre mené A2 et à la roue de turbine 24 respectivement.

De préférence, ladite pièce intermédiaire est constituée par un moyeu de turbine 28 qui assure la liaison en rotation de la roue de turbine 24 avec l'arbre mené A2.

Dans le cas d'une application à un véhicule automobile, l'arbre menant est constitué par le vilebrequin du moteur à combustion interne du véhicule, tandis que l'arbre mené A2 est constitué par l'arbre d'entrée de la transmission du véhicule, conventionnellement relié à des moyens de changement de rapport de vitesses.

L'entraînement en rotation entre le moyeu de turbine 28 et l'arbre mené A2 est réalisé conventionnellement par coopération de formes entre des rainures et des cannelures axiales ménagées respectivement sur l'un et/ou l'autre.

Avantageusement, l'arbre mené A2 comporte à son extrémité axiale avant un chanfrein destiné notamment à faciliter le montage de moyens d'étanchéité interposés radialement entre le moyeu de turbine 28 et l'arbre A2, axialement en avant de la portion d'engrènement entre les rainures et les cannelures.

Avantageusement, l'appareil d'accouplement hydrocinétique 10 comporte encore le dispositif d'amortissement ou amortisseur 20 qui est interposé axialement entre le convertisseur de couple 18 et l'embrayage de verrouillage 12. La réalisation d'un tel amortisseur 20, ainsi que son implantation, sont susceptibles de varier en fonction des applications.

Toutefois et indépendamment de son agencement, un tel amortisseur 20 comporte principalement un élément d'entrée 30 et un élément de sortie 32 entre lesquels sont interposés des organes élastiques 34 à action circonférentielle.

Généralement, l'élément d'entrée 30 et l'élément de sortie 32 de l'amortisseur 20 sont constitués par des pièces respectivement désignées comme rondelle(s) de guidage et voile, ou vice et versa.

Dans l'exemple de réalisation représenté à la figure 1, l'amortisseur 20 comporte un élément de sortie 32 d'orientation radiale qui est muni à son extrémité extérieure de pattes axiales 33 formées par pliage destinées à coopérer avec les organes élastiques 34 à action circonférentielle et dont l'extrémité intérieure est liée en rotation à la roue de turbine 24 et au moyeu 28.

De préférence, l'élément de sortie 32 est solidaire de l'extrémité intérieure de la coquille de la roue de turbine 24 par sertissage.

Le moyeu de turbine 28 présente, en coupe axiale, globalement une forme en "L" comportant une partie d'orientation radiale et une partie d'orientation axiale.

L'extrémité radialement intérieure de l'élément de sortie 32 de l'amortisseur 20 est fixée par soudage sur l'extrémité de la partie d'orientation radiale du moyeu 28 de sorte que le moyeu de turbine 28 et la coquille de la roue de turbine 24 sont liées en rotation par l'intermédiaire de l'élément de sortie 32 de l'amortisseur 20, interposé axialement et solidaire de chacune de ces pièces.

Les organes élastiques 34 à action circonférentielle sont interposés entre les éléments d'entrée 30 et de sortie 32 de l'amortisseur et sont par exemple formés par des ressorts à boudin, précintrés ou non.

L'élément d'entrée 30 est lié en rotation à un piston 36 de l'embrayage de verrouillage 12, par exemple par l'intermédiaire d'une première portion radialement intérieure en forme d'anneau plat qui est fixée par rivetage au piston 36.

L'élément d'entrée 30 comporte une deuxième portion radialement extérieure globalement en forme de demi-tore qui s'étend en majeure partie dans un espace délimité par le piston 36.

La deuxième portion de l'élément d'entrée 30 présente, en coupe axiale, un profil en "C" déterminant une concavité ouverte axialement vers l'arrière en direction de la roue de turbine 24 et formant une gorge circonférentielle dans laquelle sont reçus les organes élastiques 34 à action circonférentielle. Les organes élastiques 34 sont ainsi guidés circonférentiellement et retenus axialement par l'élément d'entrée 30.

Comme on peut le voir sur la figure 1, la deuxième portion de l'élément d'entrée 30 comporte des ouvertures pour permettre le passage axial des pattes 33 de l'élément de sortie 32 qui est lié à la coquille de la roue de turbine 24 et au moyeu de turbine 28.

Les organes élastiques 34 sont interposés entre d'une part les pattes 33 de l'élément de sortie 32 et, d'autre part, des pattes d'entraînement 31 formées de manière connues par découpe et/ou emboutissage dans la deuxième portion en "C" de l'élément d'entrée 30.

Avantageusement, les pattes 33 de l'élément de sortie 32 comportent, au niveau des zones en contact avec les organes élastiques 34, des plots de centrage et de maintien qui pénètrent à l'intérieur des spires d'extrémité de chaque organe élastique 34.

Le piston 36 de l'embrayage de verrouillage 12 est monté mobile axialement entre une position de repos (état débrayé) et une position de fonctionnement (état embrayé) et est apte à lier, de manière débrayable, la deuxième coquille avant 14A du carter 14 à l'arbre mené A2.

On rappellera succinctement que le fonctionnement de l'appareil d'accouplement hydrocinétique 10 comporte une première phase de fonctionnement, dite « phase convertisseur » et une seconde phase, dite « phase de couplage ».

Lors de la phase convertisseur, le couple de l'arbre menant est transmis par le carter 14 à la roue d'impulseur 22 qui entraîne, par circulation d'huile entre les aubes 22a et 24a, la roue de turbine 24.

Durant cette phase convertisseur, l'amortisseur 20 n'intervient pratiquement pas dans l'amortissement des vibrations ou oscillations de torsion dues principalement aux acyclismes du moteur (non représenté) comportant l'appareil 10.

En effet, les vibrations ou oscillations de torsion sont filtrées dans l'huile par le convertisseur 18 puisque la transmission du couple moteur est réalisée par l'intermédiaire de l'énergie cinétique de l'huile dans le convertisseur 18.

Dans l'exemple de réalisation de la figure 1, le couple de la roue de turbine 24 est directement transmis à l'arbre mené A2 via l'amortisseur 20 et le moyeu de turbine 28.

Lors de la phase de couplage, le piston 36 est déplacé axialement de l'arrière vers l'avant sous l'action d'une différence de la pression de l'huile s'appliquant de part et d'autre du piston 36 de manière à serrer axialement les unes contre les autres des surfaces de frottement S1, S2.

L'embrayage de verrouillage 12 est généralement commandé après le démarrage du véhicule et après le couplage hydraulique des arbres menant et mené A2, pour éviter la perte de rendement induite notamment par les phénomènes de glissement se produisant entre les roues d'impulseur 22 et de turbine 24.

Le piston 36 est monté mobile axialement par rapport à la partie d'orientation axiale du moyeu de turbine 28, laquelle partie s'étend axialement en avant de l'autre partie d'orientation radiale solidaire de l'élément de sortie 32 et de la coquille de la roue de turbine 24.

Le piston 36 comporte à sa périphérie interne une première portion en forme de "L", semblable à celle du moyeu 28, dont la partie d'orientation axiale constitue une virole 37 qui s'étend axialement vers l'avant et coopère avec un moyen d'étanchéité 38, tel qu'un segment ou un joint.

Le moyen d'étanchéité 38 est interposé entre la surface interne de coulissement du piston 36 formée par la virole 37 et la surface en vis-à-vis du moyeu 28, de manière à assurer l'étanchéité entre une première chambre, dite chambre de commande 40 et une seconde chambre, dite chambre de turbine 42.

Le moyen d'étanchéité 38 est porté par le moyeu 28, en variante par le piston 36, et logé dans une gorge annulaire du moyeu 28 qui comporte de préférence un chanfrein terminal afin de faciliter le montage par emboîtement du moyen d'étanchéité 38 dans la gorge.

Le piston 36 comporte, radialement vers l'extérieur et au-delà de la première portion, une seconde portion intermédiaire, ici en forme de C qui épouse sensiblement la forme de la deuxième coquille avant 14A du carter et définit l'espace dans lequel est logé l'amortisseur 20, et se termine par une troisième portion radiale rectiligne.

Le piston 36 est apte à être commandé sélectivement pour procéder au pontage, c'est-à-dire le déplacement du piston 36 vers sa position de fonctionnement dans laquelle le piston serre axialement au moins une première surface de frottement S1 que comporte un premier élément contre une deuxième surface de frottement S2 associée que comporte un deuxième élément.

Dans le premier exemple de réalisation de la figure 1, ledit premier élément est constitué par un disque de support 44 qui comporte une face radiale avant sur laquelle est rapportée, de préférence par collage, une garniture de frottement 46 dont la face avant forme ladite première surface de frottement S1.

Le second élément est constitué par la deuxième coquille avant 14A dont la face radiale arrière ou paroi 48 forme ladite deuxième surface de frottement S2 destinée à coopérer sélectivement avec la première surface de frottement S1.

L'embrayage de verrouillage 12 comporte des moyens d'articulation 50 qui sont respectivement interposés axialement entre une face proximale d'appui 52 du premier élément formé par le disque de support 44 et une face distale d'appui 54 d'un élément adjacent formé par le piston 36.

La face proximale d'appui 52 est formée par la face radiale arrière du disque de support 44 qui est axialement opposée à la face radiale avant portant la garniture de frottement 46, tandis que la face distale d'appui 54 est formée par la face radiale avant de la troisième portion extérieure du piston 36.

L'embrayage de verrouillage 12 comporte encore des moyens d'étanchéité 56 qui sont respectivement interposés axialement entre la face proximale d'appui 52 du disque de support 44 formant le premier élément et la face distale d'appui 54 du piston 36 formant l'élément adjacent.

Avantageusement, les moyens d'étanchéité 56 sont par exemple constitués par un joint annulaire qui, porté par le piston 36, est monté dans une gorge 58 réalisée dans le piston 36 et qui s'étend axialement dans l'espace axial compris entre le piston 36 et le disque de support 44 de manière à coopérer avec la face proximale d'appui 52 du disque 44.

Le joint d'étanchéité 56 présente ici, en coupe axiale, une section globalement circulaire en "O", en variante le joint d'étanchéité 56 est un joint à lèvre(s) présentant en coupe une section en "X" ou en "Y".

De préférence, les moyens d'étanchéité 56 sont réalisés en un matériau élastomère. Les moyens d'étanchéité 56 sont donc déformables élastiquement ce qui est particulièrement avantageux lorsque le disque de support 44 pivote autour de l'articulation 50 par rapport au piston 36.

Les moyens d'étanchéité 56 sont susceptibles d'être comprimés, notamment axialement, lors du pontage du piston 36.

Avantageusement, les moyens d'étanchéité 56 présentent une raideur déterminée et assurent une double fonction d'étanchéité et de progressivité.

De préférence, l'embrayage de verrouillage 12 comporte des moyens de progressivité qui sont interposés axialement entre la garniture de frottement 46 et le disque de support 44 ou entre le disque de support 44 et le piston 36, c'est-à-dire entre les faces proximale 52 et distale 54 d'appui.

Le disque de support 44 et le piston 36 s'étendent respectivement radialement, c'est à dire orthogonalement par rapport à l'axe principal X-X.

Le disque de support 44 formant le premier élément et le piston 36 formant l'élément adjacent sont liés en rotation par l'intermédiaire de moyens de liaison 60 qui sont aptes à assurer une transmission de couple entre lesdits éléments 44, 36.

Selon l'invention, les moyens de liaison en rotation sont constitués par des languettes élastiques 60 qui s'étendent radialement entre le disque de support 44 et le piston 36 et qui sont aptes à se déformer élastiquement selon la direction axiale pour permettre un mouvement relatif autour des moyens d'articulation 50 du premier élément formé par le disque de support 44 par rapport au piston 36 formant l'élément adjacent.

En effet, les languettes élastiques 60 s'étendent globalement dans un plan radial (V, T) et relient axialement le disque de support 44 et le piston 36 entre lesquels les languettes 60 sont agencées.

De préférence, les languettes élastiques 60 sont agencées à la périphérie radiale interne de premier élément 44, en dessous de la surface de frottement S1 portée par la garniture de frottement 46.

En variante, les languettes élastiques 60 sont agencées à la périphérie radiale externe de premier élément 44 ou de l'élément adjacent 36, soit radialement au dessus de la surface de frottement S1 portée par exemple par la garniture de frottement 46.

Dans le premier exemple de réalisation et comme illustré à la figure 3, les languettes élastiques 60 sont formées par des languettes indépendantes du disque 44 et du piston 36 et qui sont de préférence réparties circonférentiellement de manière régulière.

Les languettes élastiques 60 sont avantageusement en nombre pair, par exemple ici au nombre de 8, en variante 2, 4 ou 6 et sont appariées, les languettes d'une paire étant diamétralement opposées par rapport à l'axe principal X-X.

En variante, les languettes élastiques 60 sont en nombre impair, par exemple 3 ou 5, et sont réparties circonférentiellement de manière régulière.

De préférence, chacune des languettes élastiques 60 est constituée par un assemblage d'au moins deux languettes accolées ensemble de manière à former un ensemble unitaire.

Chacune des languettes élastiques 60 comporte au moins une première partie de jonction reliée au premier élément formé par le disque de support 44 et une deuxième partie de jonction reliée à l'élément adjacent formé par le piston 36.

Dans le premier exemple de réalisation, les première et deuxième parties de liaison sont constituées par les extrémités circonférentielles 61 et 63 de chaque languette 60, l'extrémité 61 de la languette 60 est ainsi fixée au disque de support 44 par l'intermédiaire de premier moyens de fixation 62 tandis que l'autre extrémité 63 est fixée au piston 36 par l'intermédiaire de deuxièmes moyens de fixation 64.

Avantageusement, les premiers et les deuxièmes moyens de fixation 62 et 64 sont constitués par des rivets.

En variante, les rivets 64 sont de type extrudés et sont réalisés dans le piston 36, lesdits rivets formant les deuxièmes moyens de fixation 64 du piston 36 et de la deuxième partie de liaison formée par l'extrémité 63 de chacune des languettes 60.

Selon d'autres variantes, les moyens de fixation de l'une et/ou l'autre des parties de jonction de chaque languette 60 sont constitués par tout autre moyen approprié par exemple par sertissage ou par soudage.

Pour réaliser la fixation des extrémités 61 des languettes 60, le disque de support 44 comporte des pattes 66 qui sont percées centralement pour le passage des rivets 62 et qui s'étendent radialement vers l'intérieur à partir du bord circulaire interne du disque.

Les pattes 66 de fixation des languettes 60 sont de préférence réparties circonférentiellement de manière régulière.

Pour réaliser la fixation des extrémités 63 des languettes 60, le piston 36 comporte des perçages axiaux 68 pour le passage des rivets 64.

Avantageusement, les languettes élastiques 60 sont cambrées de manière que, à l'état libre et avant leur fixation, les extrémités 61 et 63 des languettes 60 ne s'étendent pas dans un même plan radial.

Après fixation des languettes 60 respectivement avec le disque de support 44 et le piston 36, la première partie de jonction solidaire du disque de support 44 s'étend globalement dans un premier plan radial déterminé par le disque 44 formant le premier élément et la seconde partie de jonction solidaire du piston 36 s'étend globalement dans un deuxième plan radial qui, déterminé par le piston 36 formant l'élément adjacent, est globalement parallèle et décalé axialement par rapport au premier plan.

Avantageusement, les moyens d'articulation 50 sont formés par un bossage annulaire qui s'étend axialement en saillie par rapport à la face distale d'appui 54 du piston 36 et dont une partie sommitale coopère avec la face proximale d'appui 52 du disque de support 44 agencée axialement en vis-à-vis, ledit bossage 50 étant circonférentiellement continu.

En variante, les moyens d'articulation 50 sont solidaires du disque de support 44 à partir de la face proximale d'appui 52 duquel le bossage 50 fait saillie axialement en direction de la face distale d'appui 54 du piston 36 avec laquelle il coopère.

Les moyens d'articulation 50 sont donc portés par l'un ou l'autre des éléments 44, 36 entre lesquels ils sont interposés axialement.

Avantageusement, le bossage 50 est réalisé en une seule pièce, venue de matière, avec le piston 36.

De préférence, le bossage annulaire 50 est obtenu par usinage, en particulier la partie sommitale du bossage, de manière à obtenir une grande précision sur la surface de contact formant l'articulation.

Avantageusement, l'usinage du bossage annulaire 50 permet encore d'obtenir avec précision un bon état de surface lorsque le bossage 50 assure la fonction de moyen d'étanchéité.

En variante, les moyens d'articulation 50 sont constitués par un organe, tel qu'une bague, rapporté à fixation sur le disque de support 44 ou le piston 36.

En variante non représentée, les moyens d'étanchéité 56 intervenant entre le premier élément 44 et l'élément adjacent 36 sont constitués par le bossage annulaire formant les moyens d'articulation 50 contre la partie sommitale duquel la face proximale d'appui 52 du disque de support 44 est sollicité par les languettes élastiques 60.

Avantageusement, les languettes élastiques 60 exercent axialement un effort de rappel élastique entre le disque 44 et le piston 36.

De préférence, chaque languette élastique 60 est formée par au moins une languette ou un groupe de languettes et chaque languette élastique 60 s'étend circonférentiellement entre l'une et l'autre de ses extrémités 61, 63 suivant un profil globalement curviligne.

En variante, chaque languette élastique 60 s'étend circonférentiellement entre l'une et l'autre de ses extrémités 61, 63 suivant un profil globalement rectiligne ou droit.

De préférence, chaque languette droite 60 s'étend tangentiellement par rapport au bord interne circulaire du disque de support 44.

Bien entendu, le premier exemple de réalisation de l'invention, dans lequel le premier élément est formé par le disque de support 44 et l'élément adjacent est formé par le piston 36, ne constitue qu'un exemple non limitatif.

En variante non représentée, l'embrayage de verrouillage 12 étant du type monoface, le premier élément est formé par un disque de support 44 qui est lié en rotation par des languettes élastiques 60 à un élément adjacent formé par la deuxième coquille avant 14A du carter.

Dans une telle variante, la face distale d'appui 54 est constituée par la paroi 48 de la deuxième coquille avant 14A du carter et la première surface de frottement S1 est destinée à coopérer avec une deuxième surface de frottement S2 formée par la face radiale avant du piston 36 qui constitue par conséquent le second élément.

De préférence, au moins la première surface de frottement S1 appartient à une garniture de frottement 46 qui est fixée, par exemple par collage, sur la face radiale arrière du disque de support 44 dont la face radiale avant forme la face proximale d'appui 52.

Selon les applications, la garniture de frottement 46 est dotée de rainures dont le profil peut varier et qui permettent notamment d'améliorer le refroidissement au voisinage de la deuxième surface de frottement S2 et de travailler en glissement contrôlé.

En variante, la garniture de frottement 46 est supprimée et la première surface de frottement S1 est formée directement par celle des faces radiales du disque de support 44 qui ne forme pas la face proximale d'appui 52.

On décrira maintenant, par comparaison avec le premier exemple, un deuxième exemple de réalisation illustré à la figure 4.

Dans ce deuxième exemple de réalisation, les moyens d'articulation 50 sont avantageusement obtenus de manière particulièrement simple et économique par emboutissage du piston 36.

Les moyens d'articulation sont formés par un bossage annulaire 50 qui est circonférentiellement continu et solidaire de la face distale 54 du piston 36.

En variante, lorsque l'embrayage 12 comporte des moyens d'étanchéité 56 et d'articulation 50 distincts, le bossage 50 est circonférentiellement discontinu, par exemple formé par des portions en arc de cercle.

Avantageusement, le disque de support 44 comporte une jupe 39 qui, obtenue par exemple par pliage de son extrémité radiale extérieure, s'étend axialement vers l'arrière et détermine avec le piston 36 une cage dans laquelle sont montés les moyens d'étanchéité 56.

Les moyens d'étanchéité 56, tels qu'un joint, sont ainsi logés de manière à coopérer, d'une part, radialement entre la face axiale inférieure de la jupe 39 du disque 44 et le bossage annulaire 50, et d'autre part, axialement avec les faces proximale et distale d'appui 52, 54 du disque de support 44 et du piston 36 respectivement.

Avantageusement, de tels moyens d'étanchéité 56 constituent des moyens de progressivité aptes à se déformer élastiquement axialement et/ou radialement.

La déformation des moyens d'étanchéité 56, en particulier par torsion, participe à l'amélioration du fonctionnement des moyens d'articulation 50 en favorisant un mouvement de "roulage" entre le disque de support 44 et le piston 36.

De préférence, dans une variante non revendiquée les languettes élastiques 60 formant par les moyens de liaison en rotation du disque de support 44 et du piston 36, sont réalisées en une seule pièce, venues de matière, avec le disque de support 44, par exemple selon l'une ou l'autre des variantes de réalisation illustrées aux figures 5 et 6 décrites ultérieurement ne faisant pas partie de l'invention.

Dans une variante revendiquée, les languettes élastiques 60 formant par les moyens de liaison en rotation du disque de support 44 et du piston 36, sont indépendantes et analogues à celles décrites pour le premier exemple.

Avantageusement, les rivets 64 sont de type extrudés et réalisés dans le piston 36, lesdits rivets formant les deuxièmes moyens de fixation 64 du piston 36 et de la deuxième partie de liaison formée par l'extrémité 63 de chacune des languettes 60.

On décrira maintenant une variante de réalisation des languettes élastiques n'appartenant pas à l'invention telle qu'illustrée notamment à la figure 5.

Cette variante de réalisation n'appartenant pas à l'invention sera avantageusement décrite ci-après par comparaison avec les premier et deuxième exemples dans lesquels les languettes élastiques 60 sont distinctes et indépendantes des éléments formés par le disque de support 44 et le piston 36.

Avantageusement, les languettes élastiques 60 sont réalisées en une seule pièce, venues de matière, avec le premier élément ou avec l'élément adjacent auquel chaque languette 60 monobloc est reliée par au moins une partie de jonction.

De préférence, les languettes élastiques 60 sont réalisées en une seule pièce avec le disque de support 44 auquel chaque languette 60 est reliée par une partie de jonction formée par l'une 61 de ses extrémités circonférentielles.

Avantageusement, la seconde partie de jonction est formée par l'autre extrémité 63 de la languette 60 qui, libre, est apte à être liée en rotation avec l'autre desdits éléments, ici le piston 36 formant l'élément adjacent, par l'intermédiaire de moyens de fixation.

De préférence, les moyens de fixation sont constitués par des rivets, extrudés ou non, en variante par tout moyen approprié.

Avantageusement, les languettes élastiques 60 sont obtenues par découpe de la périphérie radiale interne du disque de support 44, une fente 70 s'étendant circonférentiellement entre chaque languette 60 et le disque 44 pour lui permettre de débattre axialement.

On a représenté à la figure 6 une autre variante de réalisation n'appartenant pas à l'invention des languettes élastiques 60 selon laquelle les languettes élastiques 60 sont, comme dans la variante précédente, réalisées venues de matière avec le premier élément ou élément adjacent.

De préférence, les languettes élastiques 60 sont réalisées venues de matière avec le disque de support 44 formant le premier élément et avantageusement obtenues par découpe.

Selon cette variante, la première partie de jonction de chaque languette élastique 60 avec le disque de support 44 est formée par l'une et l'autre de ses extrémités circonférentielles 61 et 63.

La deuxième partie de jonction de chaque languette élastique 60 avec le piston 36 est formée par une portion centrale 65 de la languette 60, de préférence globalement à égale distance des extrémités 61 et 63 formant la première partie de jonction avec le disque de support 44.

De préférence, la portion centrale 65 de chaque languette 60 est liée en rotation avec le piston 36 formant l'élément adjacent par l'intermédiaire de moyens de fixation.

Avantageusement, les moyens de fixation de la portion centrale 65 de chaque languette 60 sont, comme dans les premier et deuxième exemples de réalisation, constitués par des rivets 64, extrudés ou non.

Selon une variante de réalisation non représentée et non revendiquée, les languettes élastiques 60 sont venues de matière, en une seule pièce, avec une garniture de frottement 46 qui forme alors, le disque de support 44 étant supprimé, le premier élément comportant la première surface de frottement S1 et la face proximale d'appui 52.

Une telle garniture de frottement 46 formant le premier élément est liée en rotation, par l'intermédiaire de languettes monoblocs 60, à un élément adjacent formé par le piston 36, en variante par la deuxième coquille avant 14A du carter.

De préférence, la garniture de frottement 46 réalisée en une seule pièce avec les languettes élastiques 60 est une garniture tissée, notamment à partir de fibres de carbone.

On décrira maintenant plus particulièrement le fonctionnement de l'embrayage de verrouillage 12 de l'appareil 10 en relation avec les avantages des languettes élastiques 60 selon l'invention.

Dans la description qui suit et comme dans les premier et deuxième exemples de réalisation précédents, les languettes élastiques 60 assurent la liaison en rotation du disque de friction 44, formant ledit premier élément, et du piston 36, formant ledit élément adjacent.

En fonctionnement, le couplage des arbres menant et mené A2 est tout d'abord établi par la roue d'impulseur 22 et la roue de turbine 24 du convertisseur 18 au cours de la phase convertisseur, puis par l'embrayage de verrouillage 12 qui est activé lors de la phase de couplage de manière que l'arbre menant, qui est relié à la roue d'impulseur 22 par le carter 14, soit solidarisé à l'arbre mené A2 par l'amortisseur 20 et le moyeu de turbine 28 le reliant à la roue de turbine 24.

L'arbre mené A2 comporte centralement un alésage axial débouchant à l'extrémité libre avant de cet arbre. Cet alésage communique avec la chambre de commande 40, qui est délimitée axialement par la paroi 48 du carter et le piston 36, et qui est alimentée en huile sous pression par un circuit hydraulique raccordé audit alésage.

La commande du piston 36 de l'embrayage de verrouillage 12 est obtenue en faisant varier la pression de part et d'autre du piston 36, c'est à dire entre la chambre de commande 40 et la chambre de turbine 42, le piston 36 étant déplacé axialement vers l'avant, de sa position de repos vers sa position de fonctionnement, de manière à réaliser le pontage du piston 36 portant la première surface de frottement S1 et de la paroi 56 du carter 14 formant la deuxième surface de frottement S2.

En effet, lorsque le piston 36, mu par la pression, se déplace vers l'avant pour serrer la garniture de frottement 46 contre la paroi 48, le couple est alors transmis, au travers de l'amortisseur 20, de la paroi 48 de la deuxième coquille avant 14A du carter 14 qui est liée à l'arbre menant à la roue de turbine 24 qui est liée à l'arbre mené A2.

C'est précisément lorsque les première et deuxième surfaces de frottement S1 et S2 sont amenées au contact l'une avec l'autre en vue du pontage (état embrayé) que se produisent certains phénomènes préjudiciables tant au fonctionnement optimal de l'embrayage de verrouillage qu'au confort et à l'agrément de conduite.

Le principal problème tient au fait que le piston portant l'une des surfaces de frottement se déforme de manière différente en fonction de la pression qui lui est appliquée, c'est la raison pour laquelle les surfaces de frottement ne sont pas coplanaires sur l'ensemble des pressions de la plage de fonctionnement.

Ce problème, encore appelé phénomène de "mise en cône", se traduit par des pressions de contact variables entre les surfaces de frottement S1 et S2, en particulier la première surface de frottement S1 de la garniture de frottement 46 portée par le piston 44 ne coopère pas selon un contact plan-plan avec la deuxième surface de frottement S2.

Lorsque les pressions sont par exemple comprises entre 0,5 et 2,5 bars, la pression n'est pas alors répartie radialement de manière égale sur l'ensemble de la garniture de frottement, la pression s'applique principalement, voire exclusivement, sur la périphérie radiale interne de la garniture de frottement.

La pression n'est alors pas répartie radialement de manière homogène et la transmission par friction du couple s'effectue par l'intermédiaire de la partie radialement interne de la garniture de frottement et non par l'ensemble de la surface de frottement.

Pour de telles pressions, la garniture de frottement 46 et le piston 36 tendent à s'incliner obliquement vers l'arrière, c'est-à-dire que la partie radialement externe de la garniture de frottement 46 est axialement en arrière de la partie radialement interne coopérant pour l'essentiel avec la deuxième surface de frottement S2.

Inversement, lorsque les pressions appliquées sont maximales, par exemple de l'ordre de 6,5 Bars, on constate encore que la répartition de la pression n'est pas radialement homogène et qu'une pression supérieure s'exerce alors à la périphérie radiale externe de la garniture de frottement et non plus à la périphérie interne comme précédemment.

La garniture de frottement 46 et le piston 36 tendent donc à s'incliner obliquement vers l'avant, c'est-à-dire que la partie radialement externe de la garniture de frottement 46 est axialement en avant de la partie radialement interne coopérant pour l'essentiel avec la deuxième surface de frottement S2.

Par conséquent, sur l'ensemble de la plage de fonctionnement, les surfaces de frottement S1 et S2 ne sont sensiblement coplanaires que pour un nombre limité de valeurs de pression de la plage de fonctionnement, par exemple de 5,5 bars, généralement pour une pression donnée pour laquelle le couple maximal est transmis.

Or, ces variations des zones de contact et répartition non homogène de la pression sur les surfaces de frottement S1, S2 provoquent localement d'une part des échauffements et, d'autre part, des dégradations, notamment des usures irrégulières et importantes des surfaces de frottement.

Les phénomènes d'usures prématurées et d'échauffements affectent en particulier le bon fonctionnement et la longévité de la garniture de frottement 46.

De tels phénomènes sont souvent à l'origine de l'apparition de problèmes d'à-coups ou de broutement de l'embrayage 12 lors des opérations d'embrayage (ou pontage) et de débrayage en fonction du régime moteur ou éventuellement pour effectuer les changements de rapport de vitesses.

De surcroît, l'ensemble de ces phénomènes provoque souvent une dégradation du fluide hydraulique contenu dans le carter.

Ainsi, les irrégularités de frottement affectent d'une manière générale le bon contrôle de l'embrayage de verrouillage et conduisent à l'apparition de vibrations torsionnelles qui sont souvent à l'origine d'un manque de confort acoustique ou vibratoire.

Grâce à la combinaison des moyens d'articulation 50 et des languettes élastiques 60, le disque de support 44 formant le premier élément est libre de se déplacer par rapport à l'élément adjacent, par exemple le piston 36, indépendamment de la position de celui-ci.

Avantageusement, la garniture de frottement 46 portée par le disque 44 est donc susceptible de pivoter autour du bossage annulaire 50 et ainsi de compenser, en fonctionnement, les phénomènes affectant la coopération par friction des surfaces de frottement S1 et S2 de manière que les surfaces de frottement S1 et S2 soient sensiblement coplanaires quelle que soit la pression.

Avantageusement, l'embrayage de verrouillage 12 de l'appareil 10 comporte des moyens de progressivité qui, déformables élastiquement selon au moins la direction axiale, sont formés par les moyens d'étanchéité 56, tel qu'un joint en matière élastomère.

Une telle progressivité est en particulier apte à réduire les à-coups lorsque les surfaces de frottement entrent en contact l'une avec l'autre, c'est-à-dire lors du pontage de la garniture de frottement 46 contre la paroi 48 de la coquille 14A de carter.

De tels moyens de progressivité participent donc à améliorer encore la distribution de la pression au niveau des surfaces de frottement S1, S2 afin qu'elle soit optimale et uniforme selon la direction radiale.

Bien entendu, l'invention n'est nullement limitée à un embrayage de verrouillage de type monoface mais est encore susceptible de s'appliquer, par exemple, à un embrayage de verrouillage de type bifaces.

Dans le cas d'un embrayage de verrouillage bifaces (non représenté), le premier élément est formé par un disque de support qui est lié en rotation à un élément adjacent formé par le piston 36, en variante par la deuxième coquille avant 14A du carter.

Le second élément est constitué par un disque de friction qui, interposé axialement entre un premier élément formé par un disque de support 44 et la deuxième coquille avant 14A du carter lorsque l'élément adjacent est formé par le piston 36, ledit disque de friction comportant deux garnitures de frottement 46.

Ainsi, la face radiale de l'une arrière des garnitures de frottement 46 forme la deuxième surface de frottement S2 destinée à coopérer avec la première surface de frottement S1 du premier élément 44 tandis que la face radiale de l'autre avant des garnitures de frottement 46 forme une troisième surface de frottement destinée à coopérer avec une quatrième surface de frottement formée par une portion annulaire de la paroi 48 de la deuxième coquille avant 14A du carter.

Le disque de support 44 comporte une face proximale d'appui 52 qui est axialement opposée à la face radiale coopérant avec la garniture de frottement 46 du disque de friction et qui s'étend radialement, globalement parallèlement, à une face distale d'appui 54 en vis-à-vis que comporte le piston 36.

Selon la variante précitée d'un embrayage de verrouillage bifaces dans lequel l'élément adjacent est formé par la deuxième coquille avant 14A du carter, le disque de friction formant le second élément et comportant de préférence deux garnitures de frottement 46, est interposé axialement entre un premier élément formé par un disque de support 44 et le piston 36 lorsque l'élément adjacent est formé par la deuxième coquille avant 14A du carter.

La face radiale de l'une arrière des garnitures de frottement 46 forme la deuxième surface de frottement S2 destinée à coopérer avec la première surface de frottement S1 du premier élément 44 tandis que la face radiale de l'autre avant des garnitures de frottement 46 forme une troisième surface de frottement destinée à coopérer avec une quatrième surface de frottement formée par une portion annulaire du piston 36.

Le disque de support 44 comporte une face proximale d'appui 52 qui, axialement opposée à la face radiale coopérant avec l'une des garnitures de frottement 46 du disque de friction et qui s'étend radialement, globalement parallèlement, à une face distale d'appui 54 en vis-à-vis formée par la paroi 48 de la deuxième coquille avant 14A du carter.

Selon une variante, l'embrayage de verrouillage bifaces 12 comporte deux éléments, dits "premier élément", à savoir un premier disque de support lié en rotation par les languettes élastiques 60 au piston 36 et un deuxième disque de support lié en rotation à la paroi 48 de la deuxième coquille avant 14A du carter 14.

Des moyens d'articulation 50 sont alors interposés axialement d'une part entre la face proximale d'appui du premier disque de support 44 et le piston 36 et, d'autre part, entre la face proximale d'appui du deuxième disque et la paroi 48 de sorte que la première surface de frottement et la quatrième surface de frottement soient portées par des disques de support montés articulés.

## Revendications

1. Embrayage de verrouillage (12) pour un appareil d'accouplement hydrocinétique (10), notamment de véhicule automobile, comportant, autour d'un axe principal (X-X), au moins un premier élément (44, 46) comportant une première surface de frottement (S1) destinée à coopérer sélectivement avec une deuxième surface de frottement (S2) d'un second élément (14A, 36), dans lequel des moyens d'articulation (50), d'une part, et des moyens d'étanchéité (56), d'autre part, sont respectivement interposés axialement entre une face proximale d'appui (52) du premier élément (44, 46) et une face distale d'appui (54) d'un élément adjacent (14A, 36) et dans lequel le premier élément (44, 46) et l'élément adjacent (14A, 36) qui s'étendent radialement, orthogonalement par rapport à l'axe principal (X-X), sont liés en rotation par l'intermédiaire de moyens de liaison (60) aptes à assurer une transmission de couple entre lesdits éléments (44, 46, 14A, 36),
**caractérisé en ce que** les moyens de liaison en rotation sont constitués par des languettes élastiques (60) qui, s'étendant radialement entre le premier élément (44, 46) et l'élément adjacent (14A, 36), comportent au moins une première partie de jonction reliée au premier élément (44, 46) et une deuxième partie de jonction reliée à l'élément adjacent (14A, 36), lesdites languettes (60) étant aptes à se déformer élastiquement selon la direction axiale pour permettre un mouvement relatif du premier élément (44, 46) par rapport à l'élément adjacent (14A, 36) autour des moyens d'articulation (50), les languettes élastiques (60) étant distinctes des éléments (44, 46) qu'elles lient en rotation et l'une (61) des extrémités (61, 63) de chaque languette (60) formant la première partie de jonction solidaire du premier élément (44, 46) par l'intermédiaire de premiers moyens de fixation (62) et l'autre (63) des extrémités (61, 63) formant la deuxième partie de jonction solidaire de l'élément adjacent (14A, 36) par l'intermédiaire de deuxièmes moyens de fixation (64).

2. Embrayage de verrouillage selon la revendication 1, **caractérisé en ce que** les moyens d'articulation (50) sont formés par un bossage annulaire qui s'étend axialement en saillie par rapport à l'une des faces proximale d'appui (52) du premier élément (44, 46) ou distale d'appui (54) de l'élément adjacent (14A, 36), et dont une partie sommitale coopère avec l'autre des faces proximale d'appui (52) du premier élément (44, 46) ou distale d'appui (54) de l'élément adjacent (14A, 36) agencée axialement en vis-à-vis.

3. Embrayage de verrouillage selon la revendication 2, **caractérisé en ce que** les moyens d'étanchéité (56) sont formés par les moyens d'articulation (50) intervenant entre le premier élément (44, 46) et l'élément adjacent (14A, 36).

4. Embrayage de verrouillage selon l'une des revendications 1 ou 2, **caractérisé en ce que** les moyens d'étanchéité (56) sont constitués par des moyens déformables élastiquement au moins selon la direction axiale de manière que lesdits moyens d'étanchéité (56) forment des moyens de progressivité.

5. Embrayage de verrouillage selon l'une quelconque des revendications précédentes, **caractérisé en ce que** chacune des languettes élastiques (60) s'étend circonférentiellement entre l'une et l'autre de ses extrémités (61, 63) suivant un profil rectiligne ou curviligne.

6. Embrayage de verrouillage selon l'une quelconque des revendications précédentes, **caractérisé en ce que** les languettes élastiques (60) exercent axialement un effort de rappel élastique, notamment apte à assurer un contact permanent entre les moyens d'articulation (50) portés par l'un desdits premier élément (44, 46) ou élément adjacent (14A, 36) avec la face d'appui (52, 54) de l'autre desdits premier élément (44, 46) ou élément adjacent (14A, 36).

7. Embrayage de verrouillage selon l'une quelconque des revendications précédentes, **caractérisé en ce que** les languettes élastiques (60) sont cambrées.

8. Embrayage de verrouillage selon l'une quelconque des revendications précédentes, **caractérisé en ce que** le premier élément est formé par un disque de support (44) et/ou une garniture de frottement (46) et **en ce que** l'élément adjacent lié en rotation au premier élément (44, 46) est formé par un piston (36) ou par l'une avant (14A) des coquilles du carter (14) de l'appareil (10).

## Patentansprüche

1. Überbrückungskupplung (12) für eine hydrodynamische Kupplungsvorrichtung (10), insbesondere für ein Kraftfahrzeug, umfassend um eine Hauptachse (X-X) zumindest ein erstes Element (44, 46) mit einer ersten Reibungsfläche (S1), die dazu bestimmt ist, selektiv mit einer zweiten Reibungsfläche (S2) eines zweiten Elements (14A, 36) zusammenzuwirken, wobei einerseits Gelenkmittel (50) und andererseits Dichtungsmittel (56) jeweils axial zwischen einer proximalen Auflagefläche (52) des ersten Elements (44, 46) und einer distalen Auflagefläche (54) eines benachbarten Elements (14A, 36) eingefügt sind, und wobei das erste Element (44, 46) und das benachbarte Element (14A, 36), die sich radial und senkrecht zur Hauptachse (X-X) erstrecken, rotatorisch miteinander verbunden sind unter Vermittlung von Verbindungsmitteln (60), welche für eine Drehmomentübertragung zwischen den besagten Elementen (44, 46, 14A, 36) geeignet sind, **dadurch gekennzeichnet,**
**dass** die rotatorischen Verbindungsmittel durch elastische Zungen (60) gebildet sind, die sich radial zwischen dem ersten Element (44, 46) und dem benachbarten Element (14A, 36) erstrecken und zumindest einen mit dem ersten Element (44, 46) verbundenen ersten Verbindungsteil und einen mit dem benachbarten Element (14A, 36) verbundenen zweiten Verbindungsteil umfassen, wobei die besagten Zungen (60) dazu geeignet sind, sich elastisch entlang der axialen Richtung zu verformen, um eine Bewegung des ersten Elements (44, 46) relativ zum benachbarten Element (14A, 36) um die Gelenkmittel (50) herum zu erlauben, wobei die elastischen Zungen (60) verschieden sind von den Elementen (44, 46), die sie rotatorisch verbinden, und dass eines (61) der Enden (61, 63) von jeder Zunge (60) den durch erste Befestigungsmittel (62) am ersten Element (44, 46) befestigten ersten Verbindungsteil und das andere (63) der Enden (61, 63) den durch zweite Befestigungsmittel (64) am benachbarten Element (14A, 36) befestigten zweiten Verbindungsteil bildet.

2. Überbrückungskupplung nach Anspruch 1, **dadurch gekennzeichnet, dass** die Gelenkmittel (50) durch einen ringförmigen Buckel gebildet sind, der sich relativ zu der proximalen Auflagefläche (52) des ersten Elements (44, 46) oder zu der distalen Auflagefläche (54) des benachbarten Elements (14A, 36) axial vorspringend erstreckt, und von dem ein höchster Teil mit der axial gegenüberliegend angeordneten anderen proximalen Auflagefläche (52) des ersten Elements (44, 46) oder distalen Auflagefläche (54) des benachbarten Elements (14A, 36) zusammenwirkt.

3. Überbrückungskupplung nach Anspruch 2, **dadurch gekennzeichnet, dass** die Dichtungsmittel (56) durch die Gelenkmittel (50) gebildet sind, die zwischen dem ersten Element (44, 46) und dem benachbarten Element (14A, 36) eingreifen.

4. Überbrückungskupplung nach Anspruch 1 oder 2, **dadurch gekennzeichnet, dass** die Dichtungsmittel (56) durch zumindest in axialer Richtung elastisch verformbare Mittel gebildet sind in der Art, dass die besagten Dichtungsmittel (56) Progressivitätsmittel bilden.

5. Überbrückungskupplung nach einem der vorhergehenden Ansprüche, **dadurch gekennzeichnet, dass** sich jede der elastischen Zungen (60) umfangsmäßig zwischen dem einen und anderen ihrer Enden (61, 63) entlang einem geradlinigen oder gekrümmten Profil erstreckt.

6. Überbrückungskupplung nach einem der vorhergehenden Ansprüche, **dadurch gekennzeichnet, dass** die elastischen Zungen (60) axial eine elastische Rückstellkraft ausüben, die insbesondere dazu geeignet ist, einen permanenten Kontakt zwischen den von dem besagten ersten Element (44, 46) oder benachbarten Element (14A, 36) getragenen Gelenkmitteln (50) und der Auflagefläche (52, 54) des anderen besagten ersten Elements (44, 46) oder benachbarten Elements (14A, 36) sicherzustellen.

7. Überbrückungskupplung nach einem der vorhergehenden Ansprüche, **dadurch gekennzeichnet, dass** die elastischen Zungen (60) gebogen sind.

8. Überbrückungskupplung nach einem der vorhergehenden Ansprüche, **dadurch gekennzeichnet, dass** das erste Element durch eine Trägerscheibe (44) und/oder einen Reibbelag (46) gebildet ist, und dass das rotatorisch mit dem ersten Element (44, 46) verbundene benachbarte Element durch einen Kolben (36) oder durch eine vordere (14A) der Schalen des Gehäuses (14) der Vorrichtung (10) gebildet ist.

## Claims

1. Locking clutch (12) for a hydrokinetic coupling device (10), in particular for a motor vehicle, comprising, around a main axis (X-X), at least a first element (44, 46) comprising a first friction surface (S1) which is designed to co-operate selectively with a second friction surface (S2) of a second element (14A, 36), wherein firstly articulation means (50), and secondly sealing means (56), are interposed respectively, axially, between a proximal support surface (52) of the first element (44, 46) and a distal support surface (54) of an adjacent element (14A, 36), and wherein the first element (44, 46) and the adjacent element (14A, 36), which extend radially, at right-angles to the main axis (X-X), are connected in rotation by means of connection means (60), which can ensure transmission of torque between the said elements (44, 46, 14A, 36), **characterised in that** the means for connection in rotation are constituted by resilient tongues (60) which extend radially between the first element (44, 46) and the adjacent element (14A, 36), and comprise at least a first joining part which is connected to the first element (44, 46), and a second joining part which is connected to the adjacent element (14A, 36), the said tongues (60) being able to be deformed resiliently in the axial direction in order to permit relative movement of the first element (44, 46) in relation to the adjacent element (14A, 36), around the articulation means (50), the resilient tongues (60) being distinct from the elements (44, 46) which they connect in rotation, and one (61) of the ends (61, 63) of each tongue (60) forming the first joining part, which is integral with the first element (44, 46), by means of first securing means (62), and the other one (63) of the ends (61, 63) forming the second joining part, which is integral with the adjacent element (14A, 36), by means of second securing means (64).

2. Locking clutch according to claim 1, **characterised in that** the articulation means (50) are formed by an annular boss which projects axially from one of the proximal support surface (52) of the first element (44, 46) or the distal support surface (54) of the adjacent element (14A, 36), and a top part of which co-operates with the other one of the proximal support surface (52) of the first element (44, 46) or the distal support surface (54) of the adjacent element (14A, 36) which is arranged axially opposite.

3. Locking clutch according to claim 2, **characterised in that** the sealing means (56) are formed by the articulation means (50) which intervene between the first element (44, 46) and the adjacent element (14A, 36).

4. Locking clutch according to one of claims 1 or 2, **characterised in that** the sealing means (56) are constituted by means which are resiliently deformable, at least in the axial direction, such that the said sealing means (56) form progressivity means.

5. Locking clutch according to one of the preceding claims, **characterised in that** each of the resilient tongues (60) extends circumferentially between one and the other of its ends (61, 63), according to a straight or curved profile.

6. Locking clutch according to any one of the preceding claims, **characterised in that** the resilient tongues (60) exert axially a resilient return force, which in particular can ensure permanent contact between the articulation means (50) which are supported by one of the said first element (44, 46) or adjacent element (14A, 36), with the support surface (52, 54) of the other one of the said first element (44, 46) or adjacent element (14A, 36).

7. Locking clutch according to any one of the preceding claims, **characterised in that** the resilient tongues (60) are cambered.

8. Locking clutch according to any one of the preceding claims, **characterised in that** the first element is formed by a support disc (44) and/or a friction seal (46), and **in that** the adjacent element connected in rotation to the first element (44, 46) is formed by a piston (36) or by a front one (14A) of the shells of the housing (14) of the device (10).
